# EUROPEAN PATENT APPLICATION

(11) **EP 4 773 620 A1**
(43) Date of publication of application: **08.07.2026**
(21) Application number: 24886230.2
(22) Date of filing: 30.10.2024
(51) Int. Cl.: H04N 25/44, H04N 25/13, H04N 23/65, H04N 23/667, H04N 23/61

(54) **APPARATUS AND METHOD FOR PROCESSING VISION INFORMATION BY USING IMAGE SENSOR**

(30) Priority: 30.10.2023 KR 20230146968; 08.02.2024 KR 20240019664
(71) Applicant: Samsung Electronics Co., Ltd., Suwon-si, Gyeonggi-do 16677 (KR)
(72) Inventor: JEON, Jina, Suwon-si Gyeonggi-do 16677 (KR); KIM, Harksang, Suwon-si Gyeonggi-do 16677 (KR); SONG, Doukyoung, Suwon-si Gyeonggi-do 16677 (KR); YOON, Jongmin, Suwon-si Gyeonggi-do 16677 (KR)
(74) Representative: Appleyard Lees IP LLP
(86) International application number: PCT/KR2024/016740
(87) International publication number: WO 2025/095557

(57) **Abstract**

The present disclosure relates to an apparatus and a method for processing vision information by using an image sensor. In a vision mode, pixel data may be received by selecting only a vision pixel, which is a preset pixel for the vision mode from among pixels included in the image sensor, and the pixel data of the vision pixel may be processed as vision information.

## Description

### TECHNICAL FIELD

The following embodiments relate to technology for processing vision information using an image sensor.

### BACKGROUND ART

Augmented reality (AR) is a computer graphics technology that combines virtual objects or information with a real-world environment so that the virtual content appears to exist in the actual environment. AR is a display technology that overlays virtual objects onto the real world viewed by a user and may be applied to products such as head-mounted display (HMD) devices or AR glasses to provide various user experiences to a user. In addition, to allow a user to interact with AR content provided through AR glasses, eye tracking (ET) technology may be used to track the user's gaze based on light reflected from the user's eyes.

AR glasses include multiple cameras.

Some of the cameras included in the AR glasses may be color cameras configured to capture high-quality images and may include image sensors referred to as high resolution (HR) or photo video (PV) sensors.

Other cameras included in the AR glasses may be ET cameras used to detect and track a user's pupils and may be global shutter (GS) cameras.

Still other cameras included in the AR glasses may be GS cameras that obtain vision information for head tracking, hand detection and tracking, gesture recognition, and/or spatial recognition.

Because AR glasses include a large number of cameras, there may be limitations on changing the design of the AR glasses, and a significant amount of power may be consumed.

As a related prior art, Korean Patent Application Publication No. 2013-0046174 (Title of the invention: VISION RECOGNITION APPARATUS AND METHOD) discloses a technique in which some pixels among all pixels are designated as vision pixels.

### DISCLOSURE OF THE INVENTION

### TECHNICAL SOLUTIONS

According to an embodiment of the present disclosure, an electronic device includes an image sensor and a processor, wherein the processor may be configured to operate in a first mode in which first vision information is obtained using pixels of a single preset color among pixels included in the image sensor and in response to receiving, through the electronic device during operation in the first mode, an input corresponding to a mode switch, operate in a second mode in which image data is obtained using pixels of a plurality of colors included in the image sensor and second vision information is obtained based at least in part on luminance information of the image data.

According to an embodiment of the present disclosure, an apparatus for processing vision information includes an image sensor, a first power circuit configured to supply first power to a vision pixel that is preset for a vision mode among pixels included in the image sensor, a second power circuit configured to supply second power to a remaining pixel in the image sensor other than the vision pixel, and a processor, wherein the processor may be configured to, in the vision mode, perform control to output pixel data from the vision pixel of the image sensor, to receive the output pixel data and process the output pixel data as vision information and in the vision mode, supply the first power only to the vision pixel in the image sensor through the first power circuit.

A computer-readable storage medium according to an embodiment of the present disclosure includes, in a vision mode, receiving pixel data by selecting only a vision pixel, which is a preset pixel for the vision mode, from among pixels included in the image sensor and processing the pixel data of the vision pixel as vision information.

### BRIEF DESCRIPTION OF DRAWINGS

FIG. 1 is a diagram illustrating an example of obtaining vision information from an image sensor.
FIG. 2 is a diagram illustrating an example of obtaining pixel data of green pixels as vision information, according to an embodiment.
FIG. 3 is a diagram illustrating a schematic configuration of an image processing apparatus according to an embodiment.
FIG. 4 is a diagram illustrating a circuit configuration of an image sensor in an image processing apparatus, according to an embodiment.
FIG. 5 is a diagram illustrating an example of selecting vision pixels in an image processing apparatus according to an embodiment.
FIG. 6 is a diagram illustrating a configuration of a power circuit supplying power to an image sensor in an image processing apparatus, according to an embodiment.
FIG. 7 is a diagram illustrating an example of a red, green, blue, and white (RGBW)-type image sensor that may be included in an image processing apparatus, according to an embodiment.
FIG. 8 is a flowchart illustrating an operation of an image processing apparatus when operating in a vision mode, according to an embodiment.
FIG. 9 is a flowchart illustrating an operation of an image processing apparatus when operating in a capture mode, according to an embodiment.
FIG. 10 is a flowchart illustrating an operation of an image processing apparatus when performing a vision mode and a video mode simultaneously, according to an embodiment.
FIG. 11 is a flowchart illustrating an operation of an image processing apparatus when switching from a first mode to a second mode, according to an embodiment.
FIG. 12 is a flowchart illustrating an operation of an image processing apparatus performing a first vision mode and a second vision mode in a first mode, according to an embodiment.
FIG. 13 is a flowchart illustrating an operation of an image processing apparatus performing a capture mode and a vision mode simultaneously in a second mode, according to an embodiment.
FIG. 14 is a diagram illustrating examples of pixel data obtained when an image processing apparatus in a second mode operates in a high resolution (HR) vision mode and a low resolution vision mode, according to an embodiment.
FIG. 15 is a diagram illustrating examples in which vision pixels in an image sensor of an image processing apparatus are implemented with two photodiodes, according to an embodiment.
FIG. 16 is a block diagram illustrating an electronic device in a network environment according to an embodiment.
FIG. 17 is a diagram illustrating a structure of an electronic device implemented in the form of wearable augmented reality (AR) glasses, according to an embodiment.
FIG. 18 is a diagram illustrating a front surface of a wearable electronic device according to an embodiment.
FIG. 19 is a diagram illustrating a rear surface of a wearable electronic device according to an embodiment.

### BEST MODE FOR CARRYING OUT THE INVENTION

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the technical scope of the disclosure.

The terminology used herein is for the purpose of describing particular embodiments only and is not to be limiting of the embodiments. As used herein, the singular form is intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which the examples belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

In addition, when describing the embodiments with reference to the accompanying drawings, like reference numerals refer to like components regardless of drawing numbers and a repeated description related thereto will be omitted. In the description of embodiments, detailed description of well-known related technology will be omitted when it is deemed that such description will cause ambiguous interpretation of the present disclosure.

Also, in the description of the components of the embodiments, terms such as first, second, A, B, (a), (b), and the like may be used. These terms are used only for the purpose of discriminating one component from another component, and the nature, the sequences, or the orders of the components are not limited by the terms. It is to be understood that if a component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless otherwise mentioned, the descriptions on the embodiments may be applicable to the following embodiments and thus, duplicated descriptions will be omitted for conciseness.

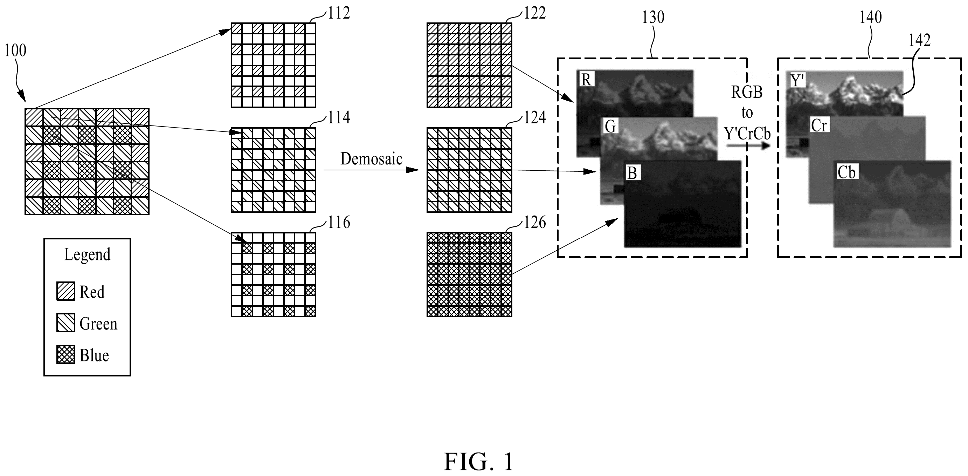

Hereinafter, an apparatus and method of processing vision information using an image sensor according to an embodiment are described in detail with reference to FIGS.1 to 19.

Vision information for head tracking, hand detection and tracking, gesture recognition, and/or spatial recognition may generally be obtained using pixel data obtained through a global shutter (GS) camera.

However, the vision information may be obtained using pixel data obtained through an image sensor such as a red, green, and blue (RGB) sensor or a red, green, blue, and white (RGBW) sensor corresponding to a high resolution (HR) rolling shutter (RS) camera.

The vision information may include information related to the position and size of an object, object classification, the shape and boundaries of an object, the motion of an object, an attribute of an image (e.g., such as color, contrast, or texture), and/or image quality (e.g., image resolution, noise, or distortion).

An example of obtaining vision information using an image sensor is described below with reference to FIG. 1.

FIG. 1 is a diagram illustrating an example of obtaining vision information from an image sensor.

Referring to FIG. 1, an image sensor 100 is an RGB sensor including red pixels, green pixels, and blue pixels.

A method of obtaining vision information may include obtaining pixel data 112 of the red pixels, pixel data 114 of the green pixels, and pixel data 116 of the blue pixels output from the image sensor 100.

In addition, the method of obtaining the vision information may include generating demosaiced pixel data 130 including demosaiced red pixel data 122, demosaiced green pixel data 124, and demosaiced blue pixel data 126 by demosaicing the pixel data 112 of the red pixels, the pixel data 114 of the green pixels, and the pixel data 116 of the blue pixels. In this case, demosaicing may be a digital image processing algorithm used to reconstruct a full-color image from incomplete color samples output from an image sensor overlaid with a color filter array (CFA).

Furthermore, the method of obtaining the vision information may include converting the demosaiced pixel data 130 in an RGB format into a YCrCb image 140 in a YCrCb format and obtaining luminance information 142 from the YCrCb image 140 as the vision information.

As shown in FIG. 1, obtaining vision information through the conventional process of the image sensor 100 may require extensive processing by a processor, and thus result in significant power consumption.

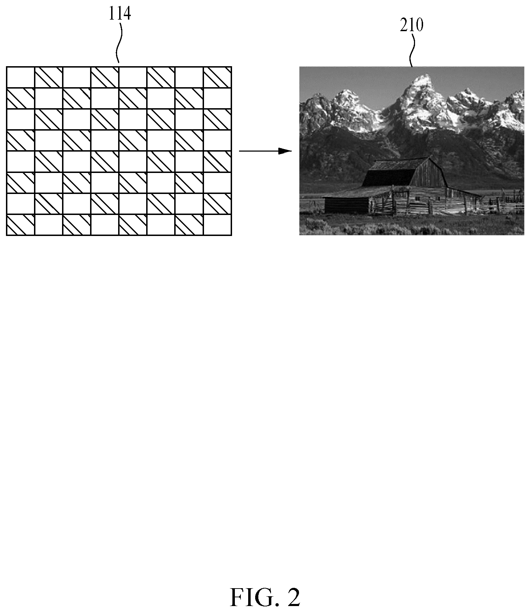

FIG. 2 is a diagram illustrating an example of obtaining pixel data of green pixels as vision information, according to an embodiment.

Referring to FIG. 2, a method of obtaining vision information may include obtaining, as vision information 210, the pixel data 114 of the green pixels output from the image sensor 100.

The reason that the pixel data 114 of the green pixels may be used as the vision information 210 is that it is confirmed that the pixel data 114 of the green pixels and the spectral characteristics of the green pixels are very similar to the spectral characteristics of luminance information. Therefore, it is confirmed that the pixel data 114 of the green pixels replacing the vision information 210 may be used as vision information for head tracking, hand detection and tracking, gesture recognition, and/or spatial recognition.

In the present disclosure, by replacing the vision information 210 with the pixel data 114 of the green pixels, it may be possible to skip a demosaicing operation and an operation of converting data to the YCrCb image 140, which are required when obtaining vision information through the image sensor 100, thereby reducing the power and time consumed by computing power.

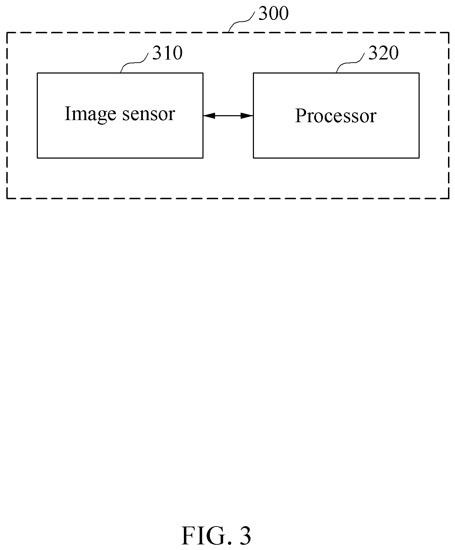

FIG. 3 is a diagram illustrating a schematic configuration of an image processing apparatus according to an embodiment.

Referring to FIG. 3, an image processing apparatus 300 of the present disclosure may include an image sensor 310 and a processor 320.

The image sensor 310 may be an RGB sensor that separates an image into red, green, and blue components.

The processor 320 may determine whether a current mode is a vision mode. In this case, the current mode may include a capture mode, a video mode, and a vision mode. The capture mode may be a mode for capturing an image, the video mode may be a mode for recording a video, and the vision mode may be a mode for obtaining vision information for head tracking, hand detection and tracking, gesture recognition, and/or spatial recognition.

When the current mode is the vision mode, the processor 320 may select only a vision pixel, which is a pixel preset for the vision mode among the pixels included in the image sensor 310, to receive pixel data and process the pixel data of the vision pixel as vision information.

The vision pixel may be a pixel preset for the vision mode among the pixels included in an image sensor. When the image sensor is an RGB sensor, the vision pixel may be all green pixels included in the image sensor or some of the green pixels included in the image sensor.

Meanwhile, although FIG. 3 illustrates the image sensor 310 and the processor 320 as separate components, the image sensor 310 and the processor 320 may be implemented as a single component.

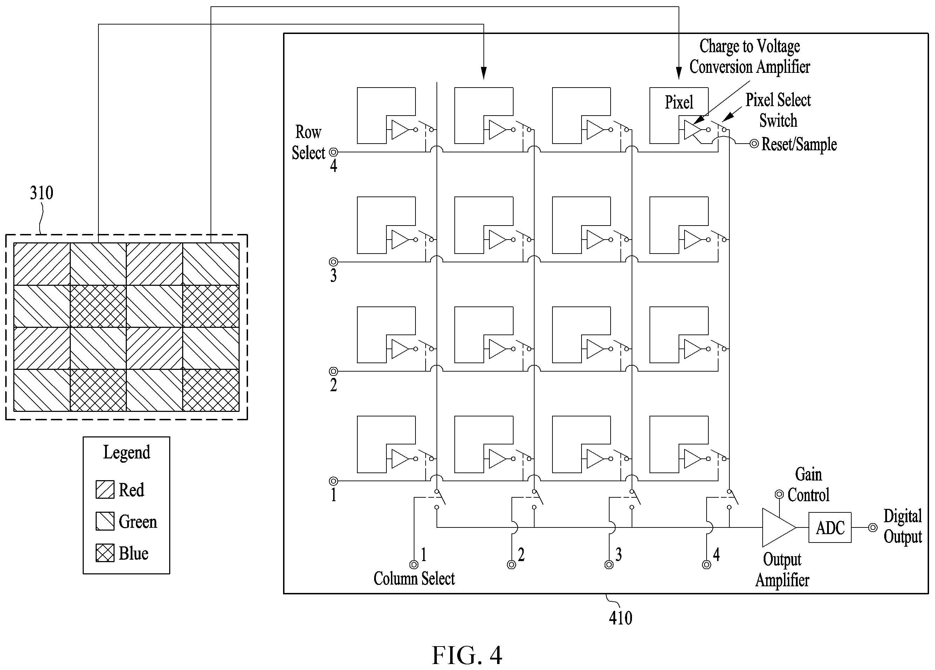

FIG. 4 is a diagram illustrating a circuit configuration of an image sensor in an image processing apparatus, according to an embodiment.

Referring to FIG. 4, the image sensor 310 may be configured as an image sensor circuit 410 and may obtain pixel data by selecting a predetermined pixel through switches. For example, when the first row of the image sensor 310 is selected, the processor 320 may perform control to output only the first and third columns corresponding to green pixels. When the second row of the image sensor 310 is selected, the processor 320 may perform control to output only the second and fourth columns. In this manner, the processor 320 may receive only the pixel data of the green pixels corresponding to vision pixels.

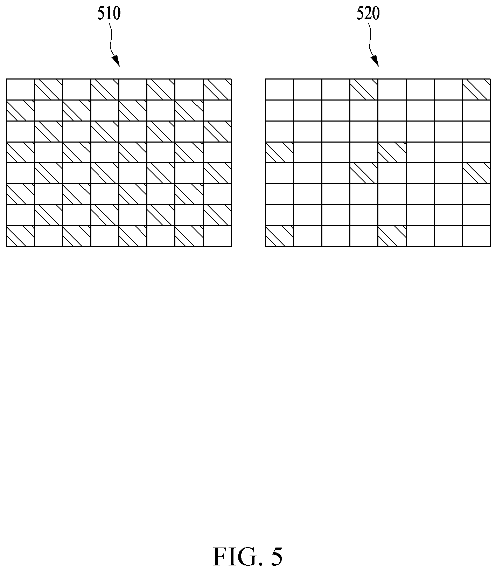

FIG. 5 is a diagram illustrating an example of selecting vision pixels in an image processing apparatus according to an embodiment.

Referring to FIG. 5, the resolution required for vision information may be much lower than the resolution of an image output from an image sensor.

Therefore, the processor 320 may operate by selecting all green pixels as vision pixels, as in an example 510 or may select only some of the green pixels as vision pixels, as in an example 520.

Returning to the description with reference to FIG. 3, when the current mode is the capture mode, the processor 320 may receive pixel data from all pixels of the image sensor, perform demosaicing for each color of filters included in the image sensor 310 to generate a demosaiced image, convert the demosaiced image into a YCbCr image in a YCbCr format, and process the YCbCr image as capture information. In this case, when the image sensor 310 is an RGB sensor, demosaicing may generate an RGB image, which is a demosaiced image including a red image, a green image, and a blue image.

When the current mode simultaneously performs the vision mode and the video mode, the processor 320 may use pixel data of all pixels received from the image sensor 310 to perform demosaicing to generate a demosaiced image, convert the demosaiced image into a YCbCr format to generate a YCbCr image, process the YCbCr image as video information for the video mode, and process the luminance information of the YCbCr image as the vision information of the vision mode.

Meanwhile, when processing the YCbCr image as the video information of the video mode, the processor 320 may convert the YCbCr image into a size required for the video mode and process the YCbCr image as video information.

When processing the luminance information of the YCbCr image as the vision information of the vision mode, the processor 320 may convert the luminance information of the YCbCr image into a size required for the vision mode and process the YCbCr image as vision information.

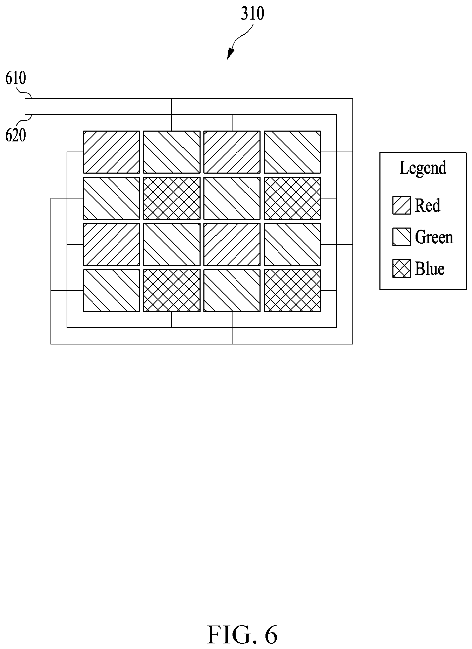

Meanwhile, as shown in FIG. 6, the image sensor 310 may receive power for vision pixels and the remaining pixels through separate power circuits.

FIG. 6 is a diagram illustrating a configuration of a power circuit supplying power to an image sensor in an image processing apparatus, according to an embodiment.

Referring to FIG. 6, the image sensor 310 may receive power through a first power circuit 610 and a second power circuit 620. The first power circuit 610 may be a circuit that supplies power to vision pixels, and

the second power circuit 620 may be a circuit that supplies power to the remaining pixels of the image sensor 310, excluding the vision pixels. In this case, the power supplied to the first power circuit 610 and the second power circuit 620 may be the same power or may be supplied through different power sources. That is, the first power circuit 610 may supply first power, and the second power circuit 620 may supply second power.

When operating only in the vision mode, the processor 320 may supply power only to the vision pixels of the image sensor 310 through the first power circuit 610 and prevent power supply through the second power circuit 620, thereby reducing power consumption of the image processing apparatus 300.

When the image sensor 310 operates in the capture mode or video mode, the processor 320 may supply power to all pixels of the image sensor through both the first power circuit 610 and the second power circuit 620.

Meanwhile, the image sensor 310 of the image processing apparatus 300 may employ an RGBW-type image sensor instead of an RGB-type image sensor.

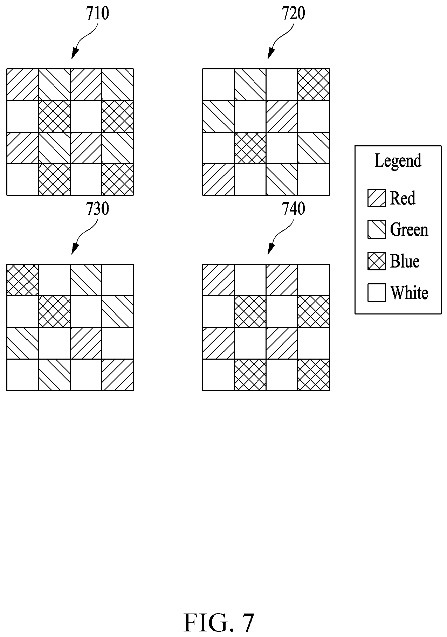

FIG. 7 is a diagram illustrating an example of an RGBW-type image sensor that may be included in an image processing apparatus, according to an embodiment.

Referring to FIG. 7, an RGBW-type image sensor may include red, green, blue, and white pixels arranged in various patterns 710, 720, 730, and 740. When an image sensor is an RGBW sensor, vision pixels may be white pixels or some of the white pixels included in the image sensor.

The white pixels of the RGBW-type image sensor may be pixels without color filters and may be ideal vision information that most closely corresponds to luminance information.

Hereinafter, a method according to the present disclosure, configured as described above, is described with reference to the diagrams.

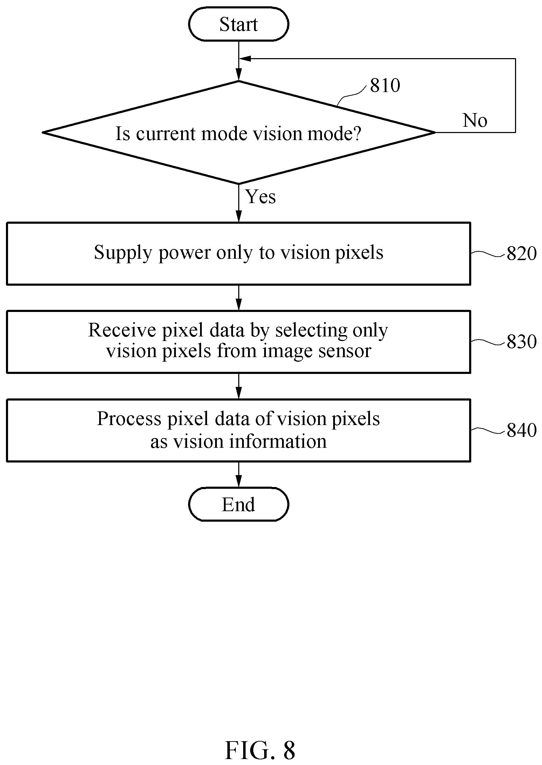

FIG. 8 is a flowchart illustrating an operation of an image processing apparatus when operating in a vision mode, according to an embodiment.

Referring to FIG. 8, in operation 810, an image processing apparatus (e.g., the image processing apparatus 300 of FIG. 3) may determine whether a current mode is a vision mode. The image processing apparatus may include a capture mode, a video mode, and a vision mode. The capture mode may be a mode for capturing an image, the video mode may be a mode for recording a video, and the vision mode may be a mode for obtaining vision information for head tracking, hand detection and tracking, gesture recognition, and/or spatial recognition.

In response to the determination of operation 810 that the current mode is not the vision mode, for example, the current mode is the capture mode or video mode, the image processing apparatus may perform an operation corresponding to the capture mode or the video mode. In response to the determination of operation 810 that the current mode is the vision mode, in operation 820, the image processing apparatus according to an embodiment may supply power only to vision pixels of an image sensor through a first power circuit (e.g., the first power circuit 610 of FIG. 6) that supplies power to the vision pixels of the image sensor. Operation 820 may be skipped. That is, the image processing apparatus may supply power to all pixels of the image sensor without recognizing the vision pixels. Here, the vision pixels may be pixels that are preset for the vision mode among the pixels included in the image sensor. When the image sensor is an RGB sensor with red, green, and blue filters, the vision pixels may be all green pixels included in the image sensor or some of the green pixels included in the image sensor. In addition, when the image sensor is an RGBW sensor with red, green, blue, and white filters, the vision pixels may be all white pixels included in the image sensor or some of the white pixels included in the image sensor.

In operation 830, the image processing apparatus according to an embodiment may select only the vision pixels from the image sensor and receive pixel data.

In operation 840, the image processing apparatus according to an embodiment may process the pixel data of the vision pixels as vision information.

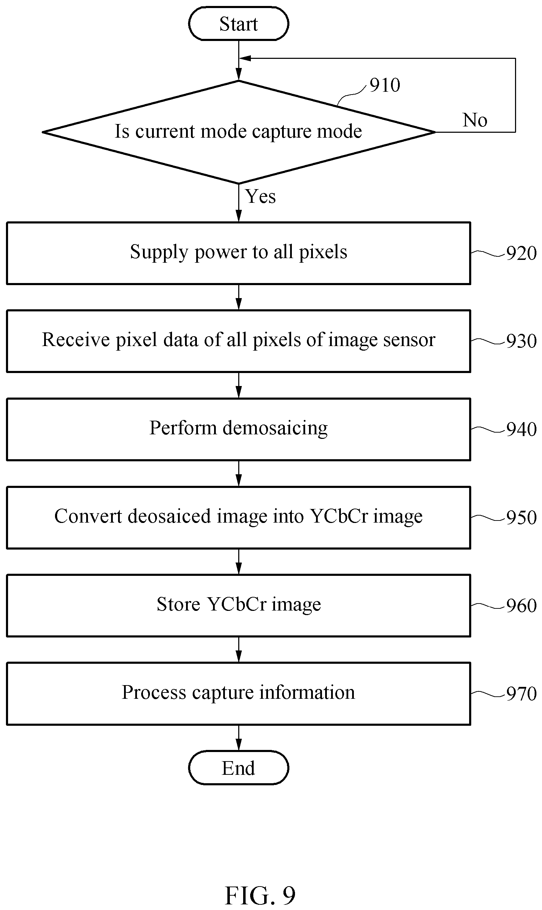

FIG. 9 is a flowchart illustrating an operation of an image processing apparatus when operating in a capture mode, according to an embodiment.

Referring to FIG. 9, in operation 910, an image processing apparatus (e.g., the image processing apparatus 300 of FIG. 3) may determine whether a current mode is a capture mode.

In response to the determination of operation 910 that the current mode is not the capture mode, for example, the current mode is a vision mode or video mode, the image processing apparatus may perform operations corresponding to the vision mode (e.g., the operations of FIG. 8) or operations corresponding to the video mode. In response to the determination of operation 910 that the current mode is the capture mode, in operation 920, the image processing apparatus may supply power to all pixels of the image sensor through a first power circuit, which supplies power to vision pixels, and a second power circuit, which supplies power to the remaining pixels of the image sensor that are not vision pixels.

In operation 930, the image processing apparatus according to an embodiment may receive pixel data from all pixels of the image sensor.

In operation 940, the image processing apparatus according to an embodiment may perform demosaicing for each color of filters included in the image sensor to generate a demosaiced image. When the image sensor is an RGB sensor, demosaicing may generate an RGB image, which is a demosaiced image including a red image, a green image, and a blue image. In addition, when the image sensor is an RGBW sensor, demosaicing may generate an RGBW image, which is a demosaiced image including a red image, a green image, a blue image, and a white image.

In operation 950, the image processing apparatus according to an embodiment may convert the demosaiced image into a YCbCr image in a YCbCr format.

In operation 960, the image processing apparatus according to an embodiment may store the YCbCr image.

In operation 970, the image processing apparatus according to an embodiment may process the YCbCr image as capture information.

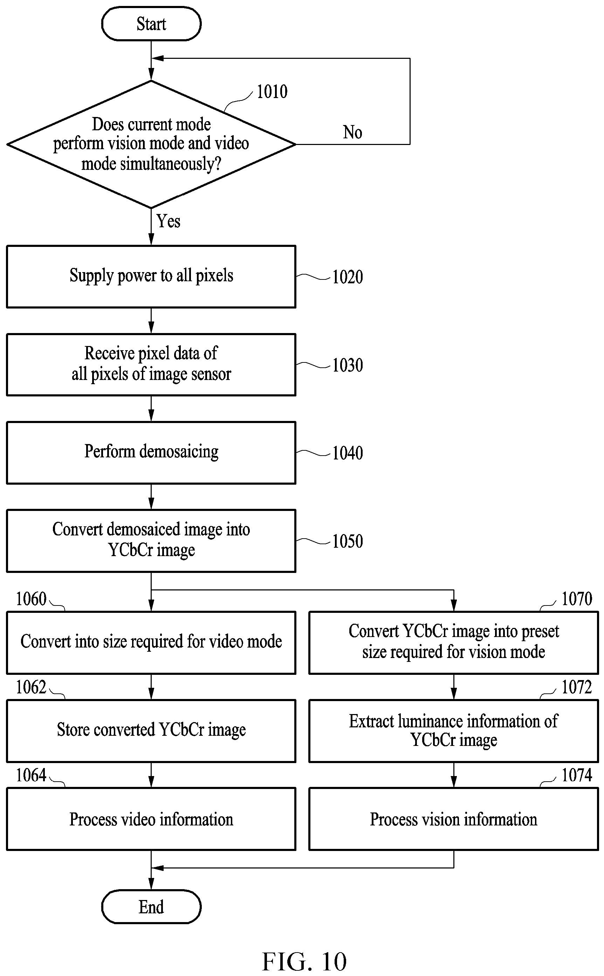

FIG. 10 is a flowchart illustrating an operation of an image processing apparatus when performing a vision mode and a video mode simultaneously, according to an embodiment.

Referring to FIG. 10, in operation 1010, an image processing apparatus (e.g., the image processing apparatus 300 of FIG. 3) may determine whether a current mode performs a vision mode and a video mode simultaneously.

In response to the determination of operation 1010 that the current mode does not perform the vision mode and the video mode simultaneously, the image processing apparatus according to an embodiment may perform an operation corresponding to the current mode. In response to the determination of operation 1010 that the current mode performs the vision mode and the video mode simultaneously, in operation 1020, the image processing apparatus according to an embodiment may supply power to all pixels of an image sensor through a first power circuit and a second power circuit.

In operation 1030, the image processing apparatus according to an embodiment may receive pixel data from all pixels of the image sensor.

In operation 1040, the image processing apparatus according to an embodiment may perform demosaicing for each color of filters included in the image sensor to generate a demosaiced image.

In operation 1050, the image processing apparatus according to an embodiment may convert the demosaiced image into a YCbCr image in a YCbCr format.

In operation 1060, the image processing apparatus according to an embodiment may convert the YCbCr image into a preset size required for the video mode.

In operation 1062, the image processing apparatus according to an embodiment may store the converted YCbCr image.

In operation 1064, the image processing apparatus according to an embodiment may process the converted YCbCr image as video information.

In this case, operation 1060 may be skipped. That is, the image processing apparatus may store the YCbCr image in operation 1062 and process the YCbCr image as video information in operation 1064 without converting the size of the YCbCr image.

The image processing apparatus according to an embodiment may convert the YCbCr image into a preset size required for the vision mode in operation 1070, independently of operation 1060.

In operation 1072, the image processing apparatus according to an embodiment may extract luminance information from the YCbCr image of the preset size. In operation 1074, the image processing apparatus according to an embodiment may process the converted luminance information as vision information.

In this case, operation 1070 may be skipped. That is, in operation 1072, the image processing apparatus may extract luminance information from the YCbCr image without size conversion and process the extracted luminance information as vision information in operation 1074. Meanwhile, although FIG. 10 illustrates that operation 1072 is performed after operation 1070, operation 1072 may be performed first, followed by operation 1070.

According to various embodiments, when it is determined that the current mode is performed simultaneously with the vision mode and the video mode, operations related to vision processing, including operation 820 and subsequent operations in FIG. 8, may be performed in combination with operations related to video information processing in the video mode in FIG. 10. In such a scenario, the operations related to video information processing and the operations related to the vision mode may be performed in parallel simultaneously. The operations related to video information processing may be some of the operations 1020, 1030, 1040, 1050, 1060, 1062, and 1064 described with reference to FIG. 10. The operations related to the vision mode may be some of the operations 820, 830, and 840 described with reference to FIG. 8. That is, the vision mode and the video mode may be processed through separate paths. For example, the image processing apparatus may transmit only pixel data to be used for vision among the pixel data of the image sensor to a path that processes the vision mode via a mobile industry processor interface (MIPI).

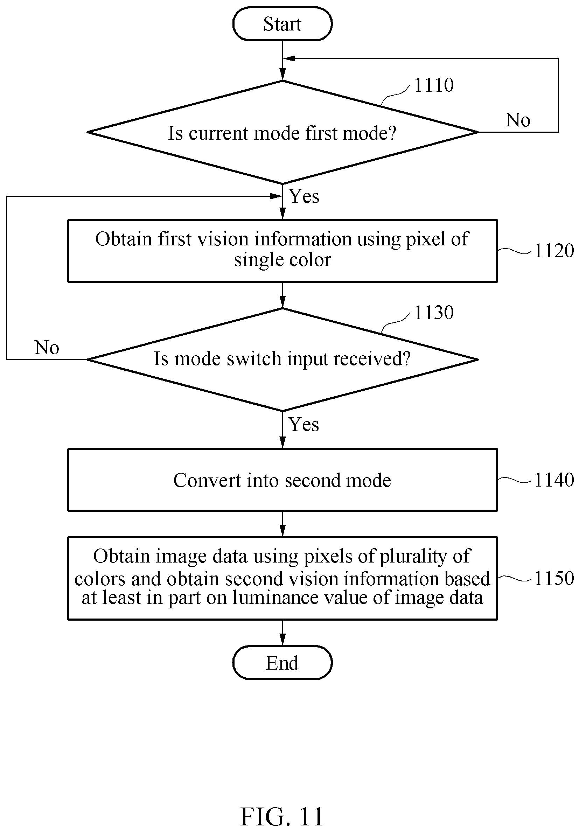

FIG. 11 is a flowchart illustrating an operation of an image processing apparatus when switching from a first mode to a second mode, according to an embodiment.

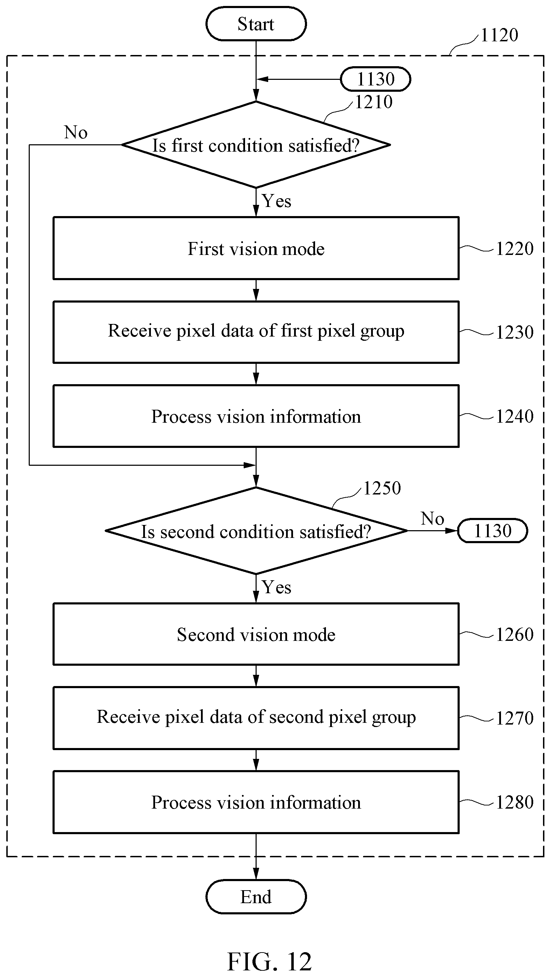

Referring to FIG. 11, in operation 1110, an image processing apparatus (e.g., the image processing apparatus 300 of FIG. 3) may determine whether a current mode is a first mode that processes vision information. When it is determined that the current mode is the first mode that processes vision information in operation 1110, the image processing apparatus may obtain first vision information using pixels of a single preset color (e.g., green or white) among pixels included in an image sensor (e.g., the image sensor 310 of FIG. 3) in operation 1120. Operation 1120 is described in detail below with reference to FIG. 12.

In operation 1130, the image processing apparatus may determine whether an input corresponding to a mode switch is received during operation in the first mode. In this case, the input corresponding to a mode switch may be an input that considers at least one of an amount of change in an object recognized in the first mode, the type of a recognized object, or a user input for image capture. More particularly, the input corresponding to a mode switch may be a case in which the amount of change in an object recognized in the first mode exceeds a preset reference value, a case in which the type of a recognized object is included in a preset object, or a case in which a user executes a program related to image capture to start image capture.

When no input corresponding to a mode switch is received in response to the determination of operation 1130, the image processing apparatus according to an embodiment may return to operation 1120.

When the input corresponding to a mode switch is received in response to the determination of operation 1130, the image processing apparatus according to an embodiment may change the current mode from the first mode to the second mode in operation 1140. In this case, the second mode may be a mode in which a vision mode for collecting vision information is performed simultaneously with a capture mode for recording a video or capturing a photo. That is, the second mode may include both the vision mode and the capture mode.

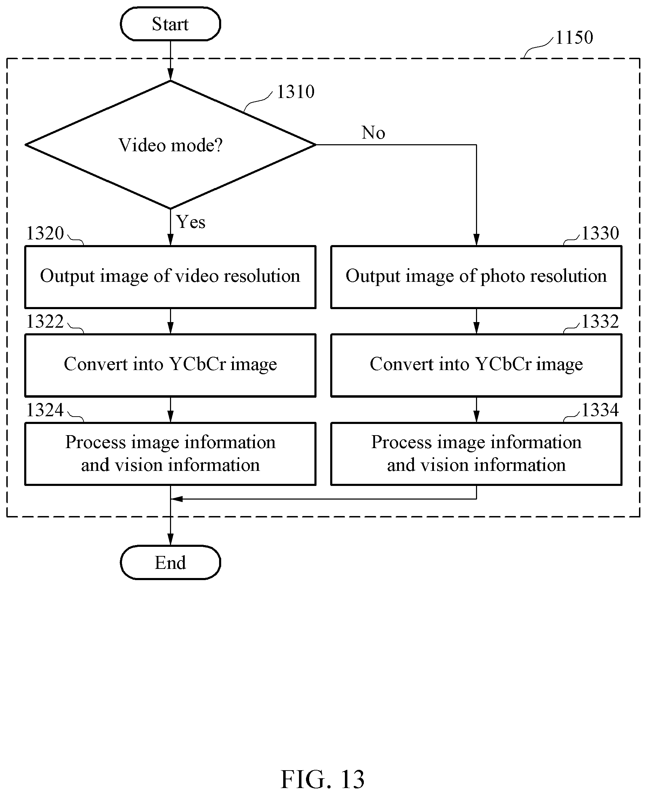

In operation 1150, the image processing apparatus according to an embodiment may obtain image data using pixels of a plurality of colors included in the image sensor and obtain second vision information based at least in part on the luminance information of the image data. Operation 1150 is described in detail below with reference to FIG. 13.

FIG. 12 is a flowchart illustrating an operation of an image processing apparatus performing a first vision mode and a second vision mode in a first mode, according to an embodiment.

Referring to FIG. 12, in operation 1210, an image processing apparatus (e.g., the image processing apparatus 300 of FIG. 3) according to an embodiment may determine whether a first condition is satisfied.

In this case, the first condition may be a condition for determining whether to use the first vision mode. The first vision mode may operate using only vision pixels with low resolution. The first vision mode may operate in a state in which an electronic device does not require a large amount of vision information. For example, when a user is wearing an electronic device and sitting still while watching a video, the electronic device may recognize, using information from an acceleration sensor and an image sensor, that a large amount of vision information is not required and operate in the first vision mode. In addition, the first vision mode may operate while the electronic device is in a sleep mode or a power-saving mode in order to reduce battery consumption. Therefore, the first condition may be at least one of a case in which a light shield (e.g., a shading member attachable to a front part of an augmented reality (AR) device) is mounted, a case in which a user is not wearing the electronic device, or a case in which an operation may be performed at a high frame rate in an environment with high illuminance since an amount of light incident on an image sensor exceeds a preset reference value.

In response to the determination of operation 1210, when the first condition is satisfied, the image processing apparatus may set the current mode to the first vision mode in operation 1220.

In operation 1230, the image processing apparatus according to an embodiment may receive pixel data of a first pixel group from the image sensor. In this case, the first pixel group may have a single color (green or white) and correspond to a pixel group corresponding to the first vision mode.

In operation 1240, the image processing apparatus according to an embodiment may process vision information using pixel data of the first pixel group.

In response to the determination of operation 1210, when the first condition is unsatisfied or when vision information is processed in operation 1240, the image processing apparatus according to an embodiment may determine whether a second condition is satisfied in operation 1250. In this case, the second condition may be a condition for determining whether HR vision information is required.

For example, more vision information regarding a surrounding environment is required when a user starts moving after sitting still, so the second condition may be a case in which acceleration that is greater than or equal to a reference value preset by an acceleration sensor is detected or a case in which the motion of a user that is greater than or equal to a preset reference value is detected using vision information obtained in the first vision mode.

For example, the second condition may be a case in which the type of information displayed on the electronic device is a preset type that is classified in advance. This is because, due to the characteristics of an AR device in which the field of view (FoV) of a user is shared with provided content, when a large amount of information (e.g., information with high brightness, information with a high frame rate, information with vivid colors, or a video) is provided, the FoV of the user may be obstructed, and thus more surrounding vision information needs to be obtained.

For example, the second condition may be a case in which an acceleration sensor or a proximity sensor detects that the user is wearing the image processing apparatus, a case in which a predetermined sound or a sound that is greater than or equal to a threshold value (e.g., a scream, a horn sound, or a user-designated voice) is detected through a microphone included in the electronic device including the image processing apparatus or through an external device (e.g., a Bluetooth peripheral such as earbuds or a watch, or a smartphone) functionally connected to the electronic device, a case in which a message, a call, or a system notification is received, or a case in which a heart rate sensor attached to an external device functionally connected to the electronic device detects the heart rate of the user and the heart rate of the user increases above or decreases below a predetermined threshold value.

For example, the second condition may be a case in which no significant amount of change is detected according to vision information in the first vision mode and then an amount of change that is greater than or equal to a predetermined level is detected (e.g., detection of a predetermined object, a change in brightness, the motion of an object greater than or equal to a predetermined level, recognition of a hand of a user, or recognition of the face of another user).

In response to the determination of operation 1250, when the second condition is satisfied, the image processing apparatus according to an embodiment may set the current mode to the second vision mode in operation 1260.

In operation 1270, the image processing apparatus according to an embodiment may receive pixel data of a second pixel group from the image sensor. In this case, the second pixel group may have a single color (green or white) and may be a pixel group corresponding to the second vision mode.

In operation 1280, the image processing apparatus according to an embodiment may process vision information using the pixel data of the second pixel group.

In response to the determination of operation 1250, when the second condition is unsatisfied or when vision information is processed in operation 1280, the image processing apparatus according to an embodiment may proceed to operation 1130 of FIG. 11.

In FIG. 12, the first mode may include the first vision mode for low resolution and the second vision mode for HR. The number of pixels in the first pixel group may be less than that the number of pixels in the second pixel group, and the first pixel group may be included in the second pixel group. In addition, the first vision mode may differ from the second vision mode in a frame rate per second, an applied gain, sensitivity, or a degree of applied noise reduction. Furthermore, the first pixel group in the first vision mode may be the vision pixels illustrated in the example 520 in FIG. 5, and the second pixel group in the second vision mode may be the vision pixels illustrated in the example 510 in FIG. 5.

FIG. 13 is a flowchart illustrating an operation of an image processing apparatus performing a capture mode and a vision mode simultaneously in a second mode, according to an embodiment.

Referring to FIG. 13, in operation 1310, an image processing apparatus (e.g., the image processing apparatus 300 of FIG. 3) may determine whether a capture mode included in a second mode is a video mode for recording a video or a capture mode for capturing a photo.

In response to the determination of operation 1310 that the current capture mode is the video mode, in operation 1320, the image processing apparatus according to an embodiment may receive pixel data output from an image sensor and use the received pixel data to output image (e.g., an image having a video resolution) data having a preset size required for the video mode. More particularly, the image processing apparatus may perform demosaicing for each color of filters included in the image sensor to generate a demosaiced image, and then convert image data generated using the demosaiced image into the preset size required for the video mode.

In operation 1322, the image processing apparatus according to an embodiment may convert the image data output in operation 1320 into a YUV (or YCbCr) image in a YUV (or YCbCr) format.

In operation 1324, the image processing apparatus according to an embodiment may provide the YUV (or YCbCr) image as an image required for the video mode and may process vision information using the luminance information of the YUV (or YCbCr) image. In this case, the image processing apparatus may check the resolution required for processing the vision information, resize the YUV (or YCbCr) image, and then process the vision information using the luminance information of the resized YUV (or YCbCr) image.

In response to the determination of operation 1310 that the current capture mode is not the video mode but the capture mode, then in operation 1330, the image processing apparatus according to an embodiment may receive pixel data output from the image sensor and use the received pixel data to output image (e.g., an image having a photo resolution) data having a preset size required for the capture mode. More particularly, the image processing apparatus may perform demosaicing for each color of filters included in the image sensor to generate a demosaiced image, and then convert image data generated using the demosaiced image into the preset size required for the capture mode.

In operation 1332, the image processing apparatus according to an embodiment may convert the image data output in operation 1330 into a YUV (or YCbCr) image in a YUV (or YCbCr) format.

In operation 1334, the image processing apparatus according to an embodiment may provide the YUV (or YCbCr) image as an image required for the capture mode and may process vision information using the luminance information of the YUV (or YCbCr) image. In this case, the image processing apparatus may check the resolution required for processing the vision information, resize the YUV (or YCbCr) image, and process the vision information using the luminance information of the resized YUV (or YCbCr) image.

Meanwhile, in operation 1324 or 1334, the image processing apparatus may also display at least a portion of the image data on a display (a component of the electronic device including the image processing apparatus) while processing the vision information.

Similar to FIG. 12, the vision mode described with reference to FIG. 13 may also be divided into a third vision mode for processing low resolution vision information and a fourth vision mode for processing HR vision information. In this case, a condition for operating in the third vision mode may refer to the first condition described with reference to FIG. 12, and a condition for operating in the fourth vision mode may refer to the second condition described with reference to FIG. 12. In addition, the third vision mode may differ from the fourth vision mode in a frame rate per second, an applied gain, sensitivity, or a degree of applied noise reduction.

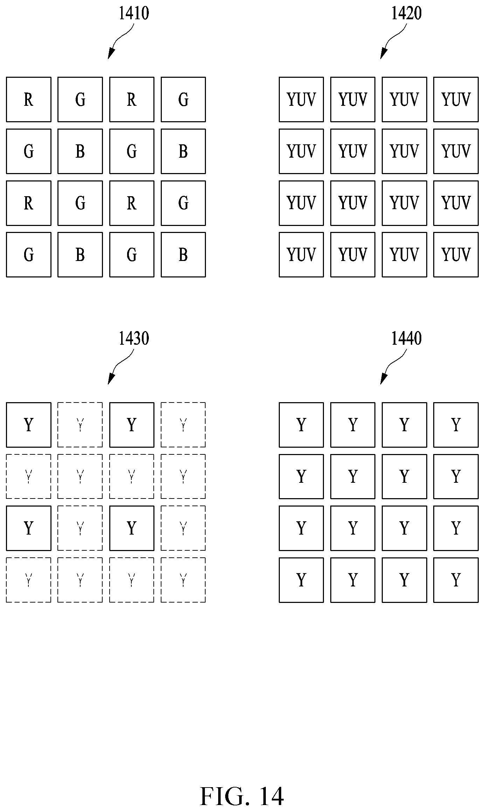

FIG. 14 is a diagram illustrating examples of pixel data obtained when an image processing apparatus in a second mode operates in an HR vision mode and a low resolution vision mode, according to an embodiment.

Referring to FIG. 14, an image processing apparatus (e.g., the image processing apparatus 300 of FIG. 3) according to an embodiment may receive pixel data from an image sensor for each color of filters included in the image sensor, as shown in an example 1410.

The image processing apparatus may convert the pixel data of 1410 into image data in a YUV format, as shown in an example 1420.

In addition, when operating in a third vision mode for processing low resolution vision information, the image processing apparatus may process vision information using a portion of luminance information from the image data of 1420, as illustrated in an example 1430.

Furthermore, when operating in a fourth vision mode for processing HR vision information, the image processing apparatus may process the vision information using all luminance information from the image data of 1420, as illustrated in an example 1440.

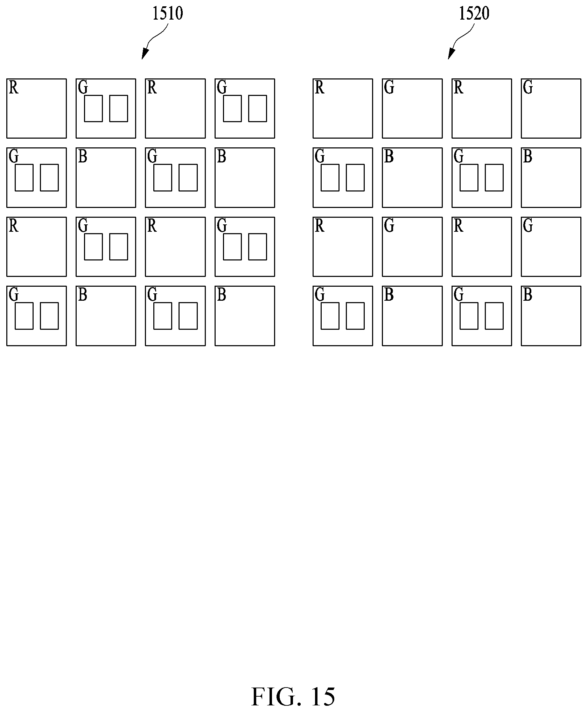

FIG. 15 is a diagram illustrating examples in which vision pixels in an image sensor of an image processing apparatus are implemented with two photodiodes, according to an embodiment.

Referring to FIG. 15, an electronic device including an image processing apparatus (e.g., the image processing apparatus 300 of FIG. 3) may implement phase-detection pixels in an image sensor to achieve more accurate six degrees of freedom (6DOF) implementation.

The phase-detection pixels may utilize a Dual Photodiode technique, in which each pixel is implemented with two photodiodes, or an on-sensor phase-detection technique, in which one of the two pixels partially blocks the left side and the other pixel partially blocks the right side, so that the two pixels function as a single phase-detection group.

When phase-detection pixels are implemented together with pixels of an image sensor, each pixel may include two or more photodiodes, which may result in a loss of effective pixel area depending on the layout. Therefore, phase-detection pixels may be implemented in at least some of the G pixels of a Bayer pattern, which have relatively high sensitivity, or the W pixels of an RGBW pattern.

As in the example in FIG. 15, phase-detection pixels may be implemented in at least some of the pixels used in a first vision mode and a second vision mode by utilizing the 2PD technique.

In the first vision mode, phase-detection information may also be obtained using fewer pixels than in the second vision mode. The phase-detection information may be processed separately from image-processed information and may be used together in a vision mode, and during each mode switch, the phase-detection information may be referenced to determine the motion of an object or a distance to the electronic device, and based on this, the vision mode may be switched.

In addition, the phase-detection pixels may be located only in the pixels used in the first vision mode, as in the example 1520, or located in the pixels used in the second vision mode, as in the example 1510. In the examples 1510 and 1520, among the green pixels indicated by G, pixels illustrated in a form including two boxes are phase-detection pixels.

For example, since the first vision mode is a low-power mode, calculating phase-detection information may require additional power consumption, and therefore phase-detection pixels may not be located in pixels applied to the first vision mode.

In this case, phase-detection pixels may be located in pixels used only in the second vision mode. When the vision mode is switched from the first vision mode to the second vision mode, phase-detection information from at least a portion of the pixels used in the second vision mode may be utilized to obtain more information than in the first vision mode.

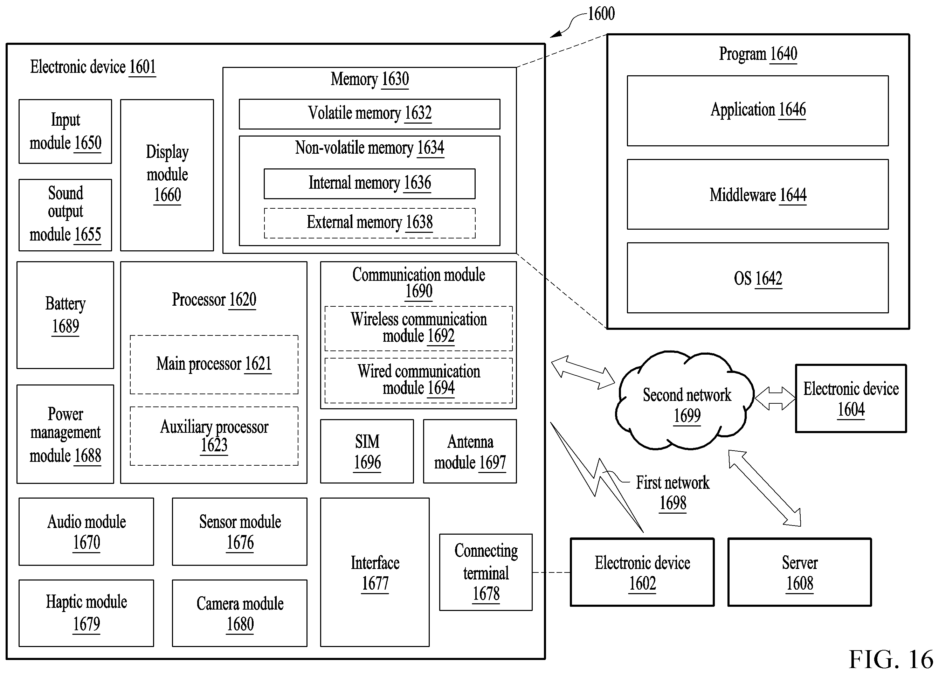

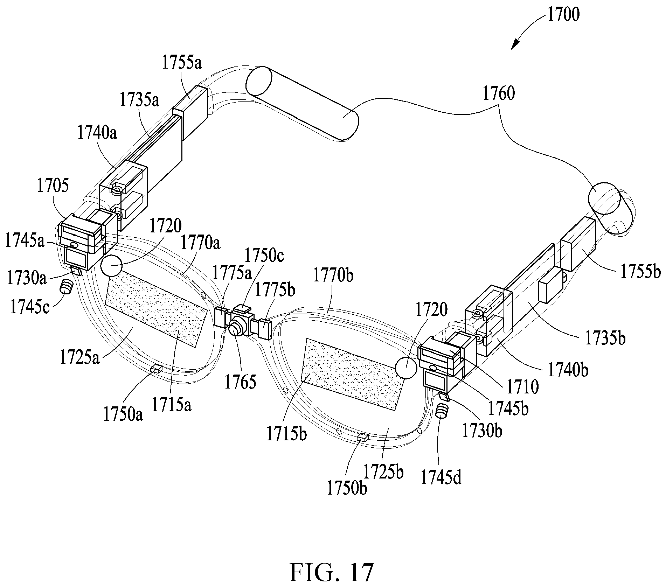

Meanwhile, the image processing apparatus 300 of FIG. 3 may be configured in the form of an electronic device 1601 in a network environment as shown in FIG. 16 or may be configured in the form of wearable AR glasses 1700 or a wearable electronic device 1800, as shown in FIGS. 17 to 19.

FIG. 16 is a block diagram illustrating the electronic device 1601 in a network environment 1600 according to an embodiment.

Referring to FIG. 16, the electronic device 1601 (e.g., the image processing apparatus 300 of FIG. 3) in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a power management module 1688, a battery 1689, a communication module 1690, a subscriber identification module (SIM) 1696, or an antenna module 1697. In some embodiments, at least one of the components (e.g., the connecting terminal 1678) may be omitted from the electronic device 1601, or one or more other components may be added to the electronic device 1601. In some embodiments, some of the components (e.g., the sensor module 1676, the camera module 1680, or the antenna module 1697) may be implemented as a single component (e.g., the display module 1660). In this case, the camera module 1680 may serve as the image sensor 310 of FIG. 3.

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an ISP or a CP) may be implemented as part of another component (e.g., the camera module 1680 or the communication module 1690) functionally related to the auxiliary processor 1623. According to an embodiment, the auxiliary processor 1623 (e.g., the NPU) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

Meanwhile, the processor 1620 may perform the operation of the processor 320 of FIG. 3.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, the hologram device, and projector. According to an embodiment, the display module 1660 may include a touch sensor adapted to detect a touch, or a pressure sensor adapted to measure the intensity of force incurred by the touch.

The audio module 1670 may convert a sound into an electric signal and vice versa. According to an embodiment, the audio module 1670 may obtain the sound via the input module 1650, or output the sound via the sound output module 1655 or an external electronic device (e.g., the electronic device 1602) (e.g., a speaker or headphone) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, a Hall sensor, or an illuminance sensor.

In addition, the sensor module 1676 may further include a camera module that may capture a still image and moving images. In this case, the camera module may include one or more lenses, image sensors, ISPs, or flashes.

Meanwhile, the camera module may correspond to the image sensor 310 of FIG. 3.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high-definition multimedia interface (HDMI), a universal serial bus (USB) interface, a secure digital (SD) card interface, or an audio interface.

For example, the electronic device 1601 may transmit an image signal to an external electronic device through the connecting terminal 1678. The electronic device 1601 may transmit an image signal that allows the external electronic device to output an image to the display module 1660 of the external electronic device.

The connecting terminal 1678 may be used to output an image signal or a voice signal. For example, the connecting terminal 1678 may simultaneously output an image signal and a voice signal. For example, the electronic device 1601 may output an image signal and a voice signal through an interface, such as an HDMI, a DisplayPort (DP), or a Thunderbolt, in the connecting terminal 1678 that simultaneously outputs the image signal and the voice signal.

The connecting terminal 1678 may include a connector via which the electronic device 1601 may be physically connected with the external electronic device (e.g., the electronic device 1602). According to an embodiment, the connecting terminal 1678 may include, for example, an HDMI connector, a DP connector, a Thunderbolt connector, a USB connector, an SD card connector, or an audio connector (e.g., a headphone connector).

The haptic module 1679 may convert an electric signal into a mechanical stimulus (e.g., a vibration or a movement) or an electrical stimulus which may be recognized by a user via his tactile sensation or kinesthetic sensation. According to an embodiment, the haptic module 1679 may include, for example, a motor, a piezoelectric element, or an electric stimulator.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more CPs that are operable independently from the processor 1620 (e.g., the AP) and support a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device 1604 via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the SIM 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or MIPI).

According to an embodiment, commands or data may be transmitted or received between the electronic device 1601 and the external electronic device 1604 via the server 1608 coupled with the second network 1699. Each of the external electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, cloud computing, distributed computing, mobile edge computing (MEC), or client-server computing technology may be used, for example. The electronic device 1601 may provide ultra low-latency services using, e.g., distributed computing or MEC. In another embodiment, the external electronic device 1604 may include an Internet-of-Things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

FIG. 17 is a diagram illustrating a structure of an electronic device implemented in the form of wearable AR glasses, according to an embodiment.

Referring to FIG. 17, an electronic device 1700 may be worn on the face of a user to provide an image associated with an AR service and/or a virtual reality (VR) service to the user.

In an embodiment, the electronic device 1700 may include a first display 1705, a second display 1710, a first screen display portion 1715a, a second screen display portion 1715b, an input optical member 1720, a first transparent member 1725a, a second transparent member 1725b, lighting units 1730a and 1730b, a first PCB 1735a, a second PCB 1735b, a first hinge 1740a, a second hinge 1740b, first cameras 1745a, 1745b, 1745c, and 1745d, a plurality of microphones (e.g., a first microphone 1750a, a second microphone 1750b, and a third microphone 1750c), a plurality of speakers (e.g., a first speaker 1755a and a second speaker 1755b), a battery 1760, second cameras 1775a and 1775b, a third camera 1765, and visors 1770a and 1770b.

In an embodiment, a display (e.g., the first display 1705 and the second display 1710) may include, for example, a liquid crystal display (LCD), a digital micromirror device (DMD), or a liquid crystal on silicon (LCoS), an organic light-emitting diode (OLED), or a micro-LED. Although not shown, when the display is one of an LCD, a DMD, and an LCoS, the electronic device 1700 may include a light source that emits light to a screen output area of the display. In another embodiment, when the display is capable of generating light by itself, when the display is either an OLED or a micro-LED, for example, the electronic device 1700 may provide a virtual image with a relatively high quality to the user even though a separate light source is not included. In an embodiment, when the display is implemented as an OLED or a micro-LED, a light source may be unnecessary, which may lead to weight reduction of the electronic device 1700. Hereinafter, a display capable of generating light by itself may be referred to as a self-luminous display, and the description is made on the assumption of the self-luminous display.

A display (e.g., the first display 1705 and the second display 1710) according to various embodiments of the disclosure may include at least one micro LED. For example, the micro-LED may express R, G, and B by emitting light by itself, and a single chip may implement a single pixel (e.g., one of R, G, and B pixels) because the micro-LED is relatively small in size (e.g., 100 micrometers (µm) or less). Accordingly, it may be possible to provide HR without a backlight unit (BLU) when the display is implemented as a micro-LED.

However, embodiments are not limited thereto. A pixel may include R, G, and B pixels, and a single chip may be implemented by a plurality of pixels including R, G, and B pixels.

In an embodiment, the display (e.g., the first display 1705 and the second display 1710) may include a display area including pixels for displaying a virtual image, and light-receiving pixels (e.g., photo sensor pixels) that are arranged among the pixels and configured to receive light reflected from the eyes, convert the received light into electrical energy, and output the electrical energy.

In an embodiment, the electronic device 1700 may detect an eye gaze (e.g., movement of a pupil) of the user through the light-receiving pixels. For example, the electronic device 1700 may detect and track an eye gaze of the right eye of the user and an eye gaze of the left eye of the user through one or more light-receiving pixels of the first display 1705 and one or more light-receiving pixels of the second display 1710. The electronic device 1700 may determine a central position of a virtual image according to the eye gazes (e.g., directions in which the pupils of the right eye and the left eye of the user gaze) of the right eye and the left eye of the user, which are detected through the one or more light-receiving pixels.

In an embodiment, light emitted from the display (e.g., the first display 1705 and the second display 1710) may reach the first screen display portion 1715a formed in the first transparent member 1725a that faces the right eye of the user and the second screen display portion 1715b formed in the second transparent member 1725b that faces the left eye of the user, by passing through a lens (not shown) and a waveguide. For example, the light emitted from the display (e.g., the first display 1705 and the second display 1710) may pass through the waveguide and may be reflected by a grating area formed in the input optical member 1720, the first screen display portion 1715a, and the second screen display portion 1715b, to be transmitted to the eyes of the user. The first transparent member 1725a and/or the second transparent member 1725b may be formed as a glass plate, a plastic plate, or a polymer, and may be transparently or translucently formed.

In an embodiment, a lens (not shown) may be disposed on the front surface of the display (e.g., the first display 1705 and the second display 1710). The lens (not shown) may include a concave lens and/or a convex lens. For example, the lens (not shown) may include a projection lens or a collimation lens.

In an embodiment, the first screen display portion 1715a and the second screen display portion 1715b or a transparent member (e.g., the first transparent member 1725a and the second transparent member 1725b) may include a lens including a waveguide and a reflective lens.

In an embodiment, the waveguide may be formed of glass, plastic, or polymer and may have a nanopattern formed on one surface of the inside or outside, for example, a grating structure of a polygonal or curved shape. According to an embodiment, light incident to one end of the waveguide may be propagated inside the display waveguide through the nanopattern to be provided to the user. In an embodiment, a waveguide including a freeform prism may provide incident light to the user through a reflection mirror. The waveguide may include at least one of at least one diffractive element (e.g., a diffractive optical element (DOE) and a holographic optical element (HOE)) or a reflective element (e.g., a reflection mirror). In an embodiment, the waveguide may guide light emitted from the display 1705 or 1710 to the eyes of the user, using the at least one diffractive element or the reflective element included in the waveguide.

According to various embodiments, the diffractive element may include the input optical member 1720 and/or an output optical member (not shown). For example, the input optical member 1720 may be an input grating area, and the output optical member (not shown) may be an output grating area. The input grating area may function as an input terminal to diffract (or reflect) light output from the display (e.g., the first display 1705 and the second display 1710 (e.g., a micro-LED)) to transmit the light to transparent members (e.g., a first transparent member 1750a and a second transparent member 1750b) of the first screen display portion 1715a and the second screen display portion 1715b. The output grating area may function as an exit to diffract (or reflect), to the eyes of the user, the light transmitted to the transparent members (e.g., the first transparent member 1750a and the second transparent member 1750b) of the waveguide.

According to various embodiments, a reflective element may include a total reflection waveguide or a total reflection optical element for total internal reflection (TIR). For example, TIR, which is a scheme of inducing light, may be forming an angle of incidence to allow light (e.g., a virtual image) input through the input grating area to be completely (100%) reflected from one surface (e.g., a specific surface) of the waveguide such that the light may be completely (100%) transmitted to the output grating area.

In an embodiment, the light emitted from the display 1705 or 1710 may be guided by the waveguide through the input optical member 1720. Light traveling in the waveguide may be induced toward the eyes of the user through the output optical member. The screen display portion 1715a or 1715b may be determined based on light emitted toward the eyes.

In an embodiment, the first cameras 1745a, 1745b, 1745c, and 1745d may each include a camera used for 6DoF, 6DoF head tracking, hand detection and tracking, gesture recognition, and/or space recognition. For example, the first cameras 1745a, 1745b, 1745c, and 1745d may each include a GS camera to detect movement of the head and a hand and track the movement.

For example, a stereo camera may be applied to the first cameras 1745a, 1745b, 1745c, and 1745d for head tracking and space recognition, and a camera with the same standard and performance may be applied. A GS camera having excellent performance (e.g., image dragging) may be used as the first cameras 1745a, 1745b, 1745c, and 1745d to detect minute movement, such as quick movement of a hand or a finger, and to track movement.

According to various embodiments, an RS camera may be used as the first cameras 1745a, 1745b, 1745c, and 1745d. The first cameras 1745a, 1745b, 1745c, and 1745d may perform a function of simultaneous localization and mapping (SLAM) through depth imaging and space recognition for 6DoF. The first cameras 1745a, 1745b, 1745c, and 1745d may perform a user gesture recognition function.

In an embodiment, the second cameras 1775a and 1775b may be used for detecting and tracking pupils. The second cameras 1775a and 1775b may also be referred to as cameras for eye tracking (ET). The second cameras 1775a and 1775b may track the eye gaze of the user. Considering the eye gaze of the user, the electronic device 1700 may position the center of a virtual image projected on the screen display portion 1715a or 1715b according to the gaze direction of the user.

A GS camera may be used as the second cameras 1775a and 1775b to detect the pupils and track quick movement of the pupils. The second cameras 1775a and 1775b may be installed respectively for the right eye and the left eye, and cameras having the same performance and standard may be used as the second cameras 1775a and 1775b for the right eye and the left eye.

In an embodiment, the third camera 1765 may also be referred to as a "HR" or a "photo video (PV)" and may include an HR camera. The third camera 1765 may include a color camera having functions for obtaining a high-quality image, such as an automatic focus (AF) function and an optical image stabilizer (OIS). Embodiments are not limited thereto, and the third camera 1765 may include a GS camera or an RS camera.

In an embodiment, at least one sensor (e.g., a gyro sensor, an acceleration sensor, a geomagnetic sensor, a touch sensor, an illuminance sensor, and/or a gesture sensor) and the first cameras 1745a, 1745b, 1745c, and 1745d may perform at least one of head tracking for 6DoF, pose estimation and prediction, gesture and/or space recognition, or a function of SLAM through depth imaging.

In another embodiment, the first cameras 1745a, 1745b, 1745c, and 1745d may be classified and used as a camera for head tracking and a camera for hand tracking.

In an embodiment, the lighting portions 1730a and 1730b may be used differently according to positions to which the lighting portions 630a and 630b are attached. For example, the lighting portions 1730a and 1730b may be attached together with the first cameras 1745a, 1745b, 1745c, and 1745d mounted around a hinge (e.g., the first hinge 1740a and the second hinge 1740b) that connects a frame and a temple or around a bridge that connects frames. If capturing is performed using a GS camera, the lighting portions 1730a and 1730b may be used to supplement the surrounding brightness. For example, the lighting portions 1730a and 1730b may be used in a dark environment or when it is not easy to detect a subject to be captured due to reflected light and mixing of various light sources.

Meanwhile, the first cameras 1745a, 1745b, 1745c, and 1745d, the second cameras 1775a and 1775b, and the third camera 1765 may be wholly or partially replaced with the image sensor 310 of FIG. 3.

In addition, among the first cameras 1745a, 1745b, 1745c, and 1745d, the second cameras 1775a and 1775b, and the third camera 1765, some may be replaced with the image sensor 310 of FIG. 3 and others may be excluded from the electronic device 1700. That is, using the vision information processing method employing the image sensor 310 of the present disclosure, the number of cameras included in the electronic device 1700 may be reduced.

In an embodiment, a PCB (e.g., the first PCB 1735a and the second PCB 1735b) may include a processor (not shown), memory (not shown), and a communication module (not shown) that control components of the electronic device 1700.

Furthermore, the PCB may perform the operation of the processor 320 of FIG. 3.

The communication module (not shown) may support establishing a direct (e.g., wired) communication channel or wireless communication channel between the electronic device 1700 and an external electronic device and performing communication through the established communication channel. The PCB may transmit electrical signals to the components constituting the electronic device 1700.

The communication module (not shown) may include one or more CPs that are operable independently of the processor and that support a direct (e.g., wired) communication or a wireless communication. According to an embodiment, the communication module (not shown) may include a wireless communication module (e.g., a cellular communication module, a short-range wireless communication module, or a GNSS communication module) or a wired communication module (e.g., a LAN communication module, or a PLC module). A corresponding one (not shown) of these communication modules may communicate with the external electronic device via a short-range communication network (e.g., Bluetooth^{™}, Wi-Fi direct, or IrDA) or a long-range communication network (e.g., a legacy cellular network, a 5G network, a next-generation communication network, the Internet, or a computer network (e.g., a LAN or a WAN)). These various types of communication modules may be implemented as a single component (e.g., a single chip) or may be implemented as a plurality of components (e.g., a plurality of chips) separate from each other.

The wireless communication module may support a 5G network after a 4G network, and next-generation communication technology, e.g., NR access technology. The NR access technology may support eMBB, mMTC, or URLLC. The wireless communication module may support a high-frequency band (e.g., a mmWave band) to achieve, e.g., a high data transmission rate. The wireless communication module may support various technologies for securing performance on a high-frequency band, such as, e.g., beamforming, massive MIMO, FD-MIMO, an array antenna, analog beamforming, or a large scale antenna.

The electronic device 1700 may further include an antenna module (not shown). The antenna module may transmit or receive a signal or power to or from the outside (e.g., the external electronic device). According to an embodiment, the antenna module may include an antenna including a radiating element including a conductive material or a conductive pattern formed in or on a substrate (e.g., the first PCB 1735a and the second PCB 1735b). According to an embodiment, the antenna module may include a plurality of antennas (e.g., array antennas).

In an embodiment, a plurality of microphones (e.g., the first microphone 1750a, the second microphone 1750b, and the third microphone 1750c) may process an external sound signal as electrical sound data. The processed sound data may be variously utilized according to a function (or an application being executed) being performed by the electronic device 1700.

In an embodiment, the plurality of speakers (e.g., the first speaker 1755a and the second speaker 1755b) may output audio data received from the communication module or stored in the memory.

In an embodiment, one or more batteries 1760 may be included, and may supply power to components constituting the electronic device 1700.

In an embodiment, the visors 1770a and 1770b may adjust a transmittance amount of external light incident on the eyes of the user according to the transmittance. The visors 1770a and 1770b may be disposed in front of or behind the first screen display portion 1715a and the second screen display portion 1715b. The front side of the first screen display portion 1715a and the second screen display portion 1715b may refer to a direction opposite to the user wearing the electronic device 1700, and the rear side may refer to a direction of the user wearing the electronic device 1700. The visors 1770a and 1770b may protect the first screen display portion 1715a and the second screen display portion 1715b and adjust an amount of external light transmitted.

For example, the visors 1770a and 1770b may include an electrochromic element that changes color according to applied power to adjust the transmittance. Electrochromism is a phenomenon in which colors change due to an oxidation-reduction reaction caused by applied power. The visors 1770a and 1770b may adjust the transmittance of external light, using the change in colors in the electrochromic element.

For example, the visors 1770a and 1770b may include a control module and the electrochromic element. The control module may control the electrochromic element to adjust the transmittance of the electrochromic element.

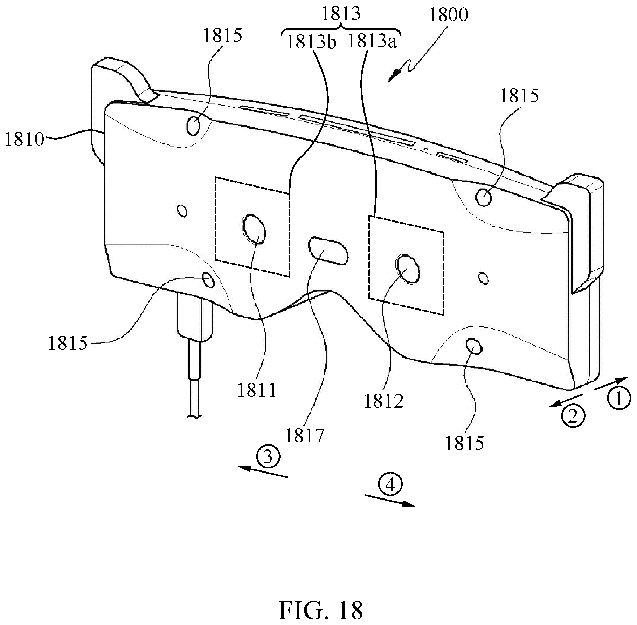

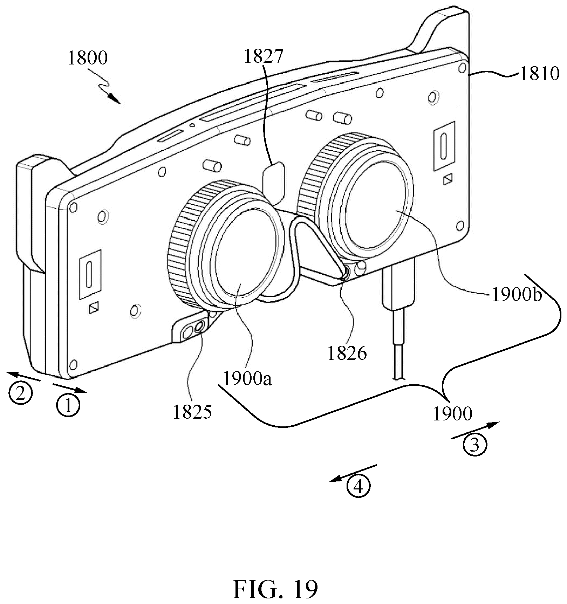

FIGS. 18 and 19 are diagrams illustrating a front surface and a rear surface of a wearable electronic device 1800 according to an embodiment.

When a user wears the wearable electronic device 1800, the appearance viewed by the eyes of the user may be illustrated in FIG. 19.

Referring to FIG. 18, according to various embodiments, the electronic device 1601 of FIG. 16 may include the wearable electronic device 1800 that provides a service that provides an extended reality (XR) experience to the user. For example, the XR or XR service may be defined as a service that collectively refers to VR, AR, and/or mixed reality (MR).

According to an embodiment, the wearable electronic device 1800 may have a form factor to be worn on the head of the user. The wearable electronic device 1800 may refer to a head-mounted device or head-mounted display (HMD) worn on the head of the user but may be provided in the form of at least one of glasses, goggles, a helmet, or a hat. The wearable electronic device 1800 may include some types such as an optical see-through (OST) type configured such that, when being worn, external light reaches the eyes of the user through glasses or a video see-through (VST) type configured such that, when being worn, light emitted from a display reaches the eyes of the user but external light is blocked not to reach the eyes of the user.

According to an embodiment, the wearable electronic device 1800 may be worn on the head of the user and provide images related to an XR service to the user. For example, the wearable electronic device 1800 may provide XR content (hereinafter, also referred to as an XR content image) output such that at least one virtual object is visible overlapping in a display area or an area determined to be the FoV of the user. According to an embodiment, the XR content may refer to an image related to a real space obtained through a camera (e.g., an image capturing camera) or an image or video in which at least one virtual object is added to a virtual space. According to an embodiment, the wearable electronic device 1800 may provide XR content based on a function being performed by the wearable electronic device 1800 and/or a function being performed by one or more external electronic devices among external electronic devices (e.g., the electronic device 1602, 1604, or 1608 of FIG. 16).

According to an embodiment, the wearable electronic device 1800 may be at least partially controlled by an external electronic device (e.g., the electronic device 1602 or 1604 of FIG. 16), or may perform at least one function under the control of the external electronic device or perform at least one function independently.

Referring to FIGS. 18 and 19, the wearable electronic device 1800 may include a housing 1810 in which at least some of the components of FIG. 16 are disposed. The housing 1810 may be configured to be worn on the head of the user. For example, the housing 1810 may include a strap and/or a wearing member to be fixed on the body part of the user. For example, the user may wear the wearable electronic device 1800 on his or her head to face a first direction ① of the wearable electronic device 1800.

Referring to FIG. 19, fourth function cameras 1825, 1826, and 1827 (e.g., face recognition cameras) and/or a display assembly 1900 may be disposed in the first direction ① of the housing 1810 facing the face of the user. Referring to FIG. 18, first function cameras 1815 (e.g., recognition cameras), second function cameras 1811 and 1812 (e.g., image-capturing cameras), a depth sensor 1817, and/or a touch sensor 1813 may be disposed in a second direction ② of the housing 1810, which is opposite to the first direction ①. Although not shown in the drawings, the housing 1810 may include memory (e.g., the memory 1630 of FIG. 16) and a processor (e.g., the processor 1620 of FIG. 16) therein and may further include other components shown in FIG. 16.

In an embodiment, the display assembly 1900 may be disposed in the first direction ① of the wearable electronic device 1800. For example, the display assembly 1900 may be positioned facing the face of the user. The display assembly 1900 may include a display panel (e.g., the display module 1660 of FIG. 16 and/or the display panel 1910 of FIG. 3A) and a lens assembly (e.g., the lens assembly 1920 of FIG. 3A).

According to an embodiment, the display assembly 1900 may include an LCD, a digital mirror device (DMD), an LCoS device, an OLED, or a micro light-emitting diode (micro-LED).

In an embodiment, when the display assembly 1900 is one of an LCD, a DMD, or an LCoS device, the wearable electronic device 1800 may include a light source that emits light (e.g., visible light) to a screen output area of the display assembly 1900. In another embodiment, when the display assembly 1900 is capable of generating light (e.g., visible light) by itself, for example, when the wearable electronic device 1800 is formed of one of an OLED or a micro-LED, the wearable electronic device 1800 may provide an XR content image with a relatively high quality to the user, even though a separate light source is not included. For example, when the display assembly 1900 is implemented as an OLED or a micro-LED, a light source may be unnecessary, which may lead to the wearable electronic device 1800 being lighter.

According to an embodiment, the display assembly 1900 may include a first display assembly 1900a and/or a second display assembly 1900b. According to an embodiment, the first display assembly 1900a may be disposed to face the left eye of the user in a fourth direction ④, and the second display assembly 1900b may be disposed to face the right eye of the user in a third direction ③.

According to an embodiment, the display assembly 1900 may include a lens assembly (e.g., a lens assembly 1920 of FIG. 3A) including a transparent waveguide. The lens assembly 1920 may adjust the focus so that a screen (e.g., an XR content image) output from a display panel (e.g., a display panel 1910 of FIG. 3A) may be seen by the eyes of the user. For example, light (e.g., visible light) emitted from the display panel 1910 may pass through the lens assembly 1920 and be transmitted to the user through a waveguide formed inside the lens assembly 1920. The lens assembly 1920 may include at least one of a Fresnel lens, a pancake lens, a convex lens, or a multi-channel lens.

In an embodiment, the first function cameras 1815 (e.g., the recognition cameras) may obtain an image in a state in which the wearable electronic device 1800 is worn by the user. The first function cameras 1815 may be used for a function of detecting the movement of the user or recognizing the gesture of the user. For example, the first function cameras 1815 may be used for at least one of hand detection, hand tracking, recognition of a gesture (e.g., a hand gesture) of the user, and/or spatial recognition. For example, the first function cameras 1815 may mainly use a GS camera having excellent performance compared to an RS camera to detect and track fine gestures or movements of hands and fingers and may be configured as a stereo camera including two or more GS cameras for head tracking and space recognition. The first function cameras 1815 may be used for 3DoF and 6DoF head tracking, position (space, environment) recognition, and/or movement recognition. The first function cameras 1815 may perform functions, such as 6DoF space recognition, and a SLAM function for recognizing information (e.g., a position and/or direction) associated with a surrounding space through depth imaging. In an embodiment, the second function cameras 1811 and 1812 may also be used for hand detection and tracking, and the recognition of user gestures.

In an embodiment, the second function cameras 1811 and 1812 (e.g., the image-capturing cameras) may obtain an image related to the surrounding environment of the wearable electronic device 1800. The second function cameras 1811 and 1812 may be used to capture images of the outside, generate an image or video corresponding to the outside, and transmit the image or video to a processor (e.g., the processor 1620 of FIG. 16). The processor 1620 may display the image provided from the second function cameras 1811 and 1812 on the display assembly 1900. The second function cameras 1811 and 1812 may also be referred to as HR or PV cameras and may include an HR camera. For example, the second function cameras 1811 and 1812 may include color cameras equipped with a function for obtaining high-quality images, such as an AF function and OIS, but are not limited thereto. The second function cameras 1811 and 1812 may also include a GS camera or an RS camera.

In an embodiment, a third function camera (e.g., an ET camera) (e.g., the camera 1940 of FIG. 3B) may be disposed on the display assembly 1900 such that the camera lenses face the eyes of the user when the user wears the wearable electronic device 1800. The third function camera 1940 may be used for detecting and tracking the pupils (e.g., ET) and/or for recognizing the iris of the user. The processor 1620 may verify a gaze direction by tracking movements of the left eye and the right eye of the user in an image received from the third function camera 1940. By tracking the positions of the pupils in the image, the processor 1620 may be configured such that the center of an XR content image displayed on a screen display area is positioned according to the direction in which the pupils are gazing. For example, the third function camera 1940 may use a GS camera to detect the pupils and track the movements of the pupils. The third function camera 1940 may be installed for each of the left eye and the right eye, and may have the same camera performance and specifications.

In an embodiment, the fourth function cameras 1825, 1826, and 1827 (e.g., face recognition cameras) may be used to detect and track a facial expression of the user (e.g., face tracking (FT)) when the user wears the wearable electronic device 1800. For example, the fourth function cameras 1825, 1826, and 1827 may be used to recognize the face of the user or may recognize and/or track both eyes of the user.

According to an embodiment, the depth sensor 1817 (or a depth camera) may be used to verify a distance to an object (e.g., a target) through, for example, time of flight (TOF). TOF, which is technology for measuring a distance to an object using a signal (e.g., nearinfrared rays, ultrasound, or laser), may transmit a signal from a transmitter and then measure the signal by a receiver, and may measure a distance to an object based on the TOF of the signal. For example, the depth sensor 1817 may be configured to transmit a signal and receive a signal reflected from a subject. Alternatively of or additionally, the first cameras 1845a, 1845b, 1845c, and 1845d may determine the distance to the object in place of the depth sensor 1817.

According to an embodiment, the touch sensor 1813 may be disposed in the second direction ② of the housing 1810. The touch sensor 1813 may be implemented as a single type or a left/right separated type based on the shape of the housing 1810 but is not limited thereto. For example, in a case in which the touch sensor 1813 is implemented as the left/right separated type as shown in FIG. 18, when the user wears the wearable electronic device 1800, a first touch sensor 1813a may be disposed at a position corresponding to the left eye of the user in the fourth direction ④, and a second touch sensor 1813b may be disposed at a position corresponding to the right eye of the user in the third direction ③.

In an embodiment, the touch sensor 1813 may recognize a touch input using at least one of, for example, capacitive, resistive, infrared, or ultrasonic methods. For example, the touch sensor 1813 using the capacitive method may recognize a physical touch (or contact) input or hovering (or proximity) input of an external object. According to some embodiments, the wearable electronic device 1800 may use a proximity sensor (not shown) to recognize the proximity to an external object.

According to an embodiment, the touch sensor 1813 may have a two-dimensional (2D) surface and transmit, to a processor (e.g., the processor 1620 of FIG. 16), touch data (e.g., touch coordinates) of an external object (e.g., a finger of the user) contacting the touch sensor 1813. The touch sensor 1813 may detect a hovering input of an external object (e.g., a finger of the user) approaching within a first distance away from the touch sensor 1813 or detect a touch input contacting the touch sensor 1813.

According to an embodiment, the touch sensor 1813 may provide 2D information about the contact point to the processor 1620 as "touch data" when an external object touches the touch sensor 1813. The touch data may be described as a "touch mode." When the external object is positioned within the first distance from the touch sensor 1813 (or hovers above a proximity or touch sensor), the touch sensor 1813 may provide hovering data about a time point or position of the external object hovering around the touch sensor 1813 to the processor 1620. The hovering data may also be described as a "hovering mode/proximity mode."

According to an embodiment, the wearable electronic device 1800 may obtain the hovering data using at least one of the touch sensor 1813, a proximity sensor (not shown), and/or the depth sensor 1817 to generate information about a distance between the touch sensor 1813 and an external object, a position, or a time point.

According to an embodiment, the housing 1810 may include components of FIG. 16, for example, a processor (e.g., the processor 1620 of FIG. 16) and memory (e.g., the memory 1630 of FIG. 16) therein.

In an embodiment, the memory 1630 may store various instructions executable by the processor 1620. The instructions may include control instructions, such as arithmetic and logical computation, data movement, or input/output, which may be recognized by the processor 1620. The memory 1630 may include volatile memory (e.g., the volatile memory 1632 of FIG. 16) and non-volatile memory (e.g., the non-volatile memory 1634 of FIG. 16) to store, temporarily or permanently, various pieces of data.

In an embodiment, the processor 1620 may be operatively, functionally, and/or electrically connected to each of the components of the wearable electronic device 1800 to perform control and/or communication-related computation or data processing of each of the components. The operations performed by the processor 1620 may be stored in the memory 1630, and when executed, may be executed by the instructions that cause the processor 1620 to operate.

Although there will be no limitation to the computation and data processing functions implemented by the processor 1620 on the wearable electronic device 1800, a series of operations related to an XR content service function will be described hereinafter. The operations of the processor 1620 to be described below may be performed by executing the instructions stored in the memory 1630.

According to an embodiment, the processor 1620 may generate a virtual object based on virtual information based on image information. The processor 1620 may output a virtual object related to an XR service along with background spatial information through the display assembly 1900. For example, the processor 1620 may obtain image information by capturing an image related to a real space corresponding to the FoV of the user wearing the wearable electronic device 1800 through the second function cameras 1811 and 1812 or may generate a virtual space of a virtual environment. For example, the processor 1620 may perform control to display, on the display assembly 1900, XR content (hereinafter, referred to as an XR content screen) that outputs at least one virtual object such that the at least one virtual object is visible overlapping in a display area or an area determined to be the FoV of the user.

According to an embodiment, an electronic device may include an image sensor (e.g., the image sensor 310 or the camera module 1680 of FIG. 16) and a processor (e.g., the processor 320 or the processor 1620 of FIG. 16), wherein the processor may be configured to operate in a first mode in which first vision information is obtained using pixels of a single preset color among pixels included in the image sensor, in response to receiving, through the electronic device during operation in the first mode, an input corresponding to a mode switch, operate in a second mode in which image data is obtained using pixels of a plurality of colors included in the image sensor and second vision information is obtained based at least in part on luminance information of the image data.

According to an embodiment, the input corresponding to the mode switch may be an input that considers at least one of an amount of change in an object recognized in the first mode, a type of a recognized object, or a user input for image capture.

According to an embodiment, based on at least a portion of the first vision information obtained in the first mode, the second mode, when switched from the first mode, obtains second vision information, and the first vision information may include at least one of a position of a recognized object, a type of a recognized object, or brightness of a surrounding environment.

According to an embodiment, the second mode may include a low resolution mode including obtaining video image data for video recording and obtaining the second vision information based on luminance information of the video image data and an HR mode including obtaining photo image data having a higher resolution than the video image data to capture an image and obtaining third vision information having a higher resolution than the second vision information based on luminance information of the photo image data.

According to an embodiment, the first vision information may have the same resolution as the second vision information.

According to an embodiment, the electronic device may further include a display, wherein the processor may be configured to, when operating in the second mode, perform control to display, on the display, at least a portion of the image data obtained using the pixels of the plurality of colors.

According to an embodiment, the first mode may include a first vision mode and a second vision mode, the number of pixels of the single color in a first pixel group of the image sensor used in the first vision mode may be less than the number of pixels of the single color in a second pixel group of the image sensor used in the second vision mode, and the first pixel group may be included in the second pixel group.

According to an embodiment, first sub-vision information used in the first vision mode may differ from second sub-vision information used in the second vision mode in a frame rate per second, an applied gain, sensitivity, or a degree of applied noise reduction.

According to an embodiment, the second sub-vision information may be obtained based on brightness included in the first sub-vision information, a position of a detected object, or a type of a detected object.

According to an embodiment, a power circuit supplying power to the first mode may be separate from a power circuit supplying power to the second mode.

According to an embodiment, the first vision mode may operate in a low-power state or when an electronic device is not worn by a user.

According to an embodiment, an apparatus for processing vision information may include an image sensor (e.g., the image sensor 310 of FIG. 3 or the camera module 1680 of FIG. 16), a first power circuit (e.g., the first power circuit 610 of FIG. 6) configured to supply first power to a vision pixel that is preset for a vision mode among pixels included in the image sensor, a second power circuit (e.g., the second power circuit 620 of FIG. 6) configured to supply second power to a remaining pixel in the image sensor other than the vision pixel, and a processor, wherein the processor (e.g., the processor 320 of FIG. 3 or the processor 1620 of FIG. 16) may be configured to, in the vision mode, perform control to output pixel data from the vision pixel of the image sensor, to receive the output pixel data and process the output pixel data as vision information and in the vision mode, supply the first power only to the vision pixel in the image sensor through the first power circuit.

According to an embodiment, when the image sensor is an RGB sensor, the vision pixel may be a green pixel or a portion of the green pixel.

According to an embodiment, when the image sensor is an RGBW sensor, the vision pixel may be a white pixel or a portion of the white pixel.

According to an embodiment, when a current mode includes a capture mode, the processor may be configured to generate a demosaiced image by performing demosaicing using pixel data of all pixels received from the image sensor, generate a YCbCr image by converting the demosaiced image into a YCbCr format, process the YCbCr image as image information of the capture mode, and process luminance information of the YCbCr image as vision information of the vision mode.

According to an embodiment, the vision information may have a resolution less than that of the YCbCr image.

According to an embodiment, the processor may supply power to all pixels by supplying first power to the first power circuit and supplying second power to the second power circuit.

According to an embodiment, the capture mode may include a low resolution mode including obtaining video image data for video recording and obtaining the first vision information based on luminance information of the video image data and an HR mode including obtaining photo image data having a higher resolution than the video image data to capture an image and obtaining second vision information having a higher resolution than the first vision information based on luminance information of the photo image data.

According to an embodiment, in response to receiving a user input for changing the current mode to the capture mode, the processor may perform the capture mode as a response to the user input.

According to an embodiment, the processor may detect an object from the vision information and perform the capture mode according to the motion of the object or the type of the object.

The method according to the embodiments described above may be recorded in non-transitory computer-readable storage media including program instructions to implement various operations of the embodiments described above. The media may also include, alone or in combination with the program instructions, data files, or data structures. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as floptical disks; and hardware devices that are specifically configured to store and perform program instructions, such as ROM, random-access memory (RAM), or flash memory. Examples of program instructions include both machine code, such as produced by a compiler, and files containing higher-level code that may be executed by the computer using an interpreter. The above-described hardware devices may be configured to act as one or more software modules in order to perform the operations of the above-described examples, or vice versa.

The software may include a computer program, a piece of code, an instruction, or one or more combinations thereof, to independently or collectively instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more computer-readable recording mediums.

While the examples are described with reference to drawings, it will be apparent to one of ordinary skill in the art that various alterations and modifications in form and details may be made in these examples without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

## Claims

1. An electronic device comprising:
an image sensor; and
a processor,
wherein the processor is configured to:
operate in a first mode in which first vision information is obtained using pixels of a single preset color among pixels comprised in the image sensor; and
in response to receiving, through the electronic device during operation in the first mode, an input corresponding to a mode switch, operate in a second mode in which image data is obtained using pixels of a plurality of colors comprised in the image sensor and second vision information is obtained based at least in
part on luminance information of the image data.

2. The electronic device of claim 1, wherein the input corresponding to the mode switch is an input that considers at least one of an amount of change in an object recognized in the first mode, a type of a recognized object, or a user input for image capture.

3. The electronic device of any one of claims 1 and 2, wherein
based on at least a portion of the first vision information obtained in the first mode, the second mode, when switched from the first mode, obtains second vision information, and
the first vision information comprises at least one of a position of a recognized object, a type of a recognized object, or brightness of a surrounding environment.

4. The electronic device of any one of claims 1 to 3, wherein the second mode comprises:
a low resolution mode comprising obtaining video image data for video recording and obtaining the second vision information based on luminance information of the video image data; and
a high resolution (HR) mode comprising obtaining photo image data having a higher resolution than the video image data to capture an image and obtaining third vision information having a higher resolution than the second vision information based on luminance information of the photo image data.

5. The electronic device of any one of claims 1 to 4, wherein the first vision information has a same resolution as the second vision information.

6. The electronic device of any one of claims 1 to 5, further comprising:
a display,
wherein the processor is configured to, when operating in the second mode, perform control to display, on the display, at least a portion of the image data obtained using the pixels of the plurality of colors.

7. The electronic device of any one of claims 1 to 6, wherein
the first mode comprises a first vision mode and a second vision mode,
a number of pixels of the single color in a first pixel group of the image sensor used in the first vision mode is less than a number of pixels of the single color in a second pixel group of the image sensor used in the second vision mode, and
the first pixel group is comprised in the second pixel group.

8. The electronic device of any one of claims 1 to 7, wherein first sub-vision information used in the first vision mode differs from second sub-vision information used in the second vision mode in a frame rate per second, an applied gain, sensitivity, or a degree of applied noise reduction.

9. The electronic device of any one of claims 1 to 8, wherein the second sub-vision information is obtained based on brightness comprised in the first sub-vision information, a position of a detected object, or a type of a detected object.

10. The electronic device of any one of claims 1 to 9, wherein a power circuit supplying power to the first mode is separate from a power circuit supplying power to the second mode.

11. The electronic device of any one of claims 1 to 10, wherein the first vision mode operates in a low-power state or when the electronic device is not worn by a user.

12. An apparatus for processing vision information, the apparatus comprising:
an image sensor;
a first power circuit configured to supply first power to a vision pixel that is preset for a vision mode among pixels comprised in the image sensor;
a second power circuit configured to supply second power to a remaining pixel in the image sensor other than the vision pixel; and
a processor,
wherein the processor is configured to:
in the vision mode, perform control to output pixel data from the vision pixel of the image sensor, to receive the output pixel data and process the output pixel data as vision information; and
in the vision mode, supply the first power only to the vision pixel in the image
sensor through the first power circuit.

13. The apparatus of claim 12, wherein, when a current mode comprises a capture mode, the processor is configured to:
generate a demosaiced image by performing demosaicing using pixel data of all pixels received from the image sensor;
generate a YCbCr image by converting the demosaiced image into a YCbCr format;
process the YCbCr image as image information of the capture mode; and
process luminance information of the YCbCr image as vision information of the vision mode.

14. The apparatus of any one of claims 12 and 13, wherein the processor is configured to supply power to all pixels in the image sensor by supplying the first power to the first power circuit and supplying the second power to the second power circuit.

15. The apparatus of any one of claims 12 to 14, wherein the capture mode comprises:
a low resolution mode comprising obtaining video image data for video recording and obtaining first vision information based on luminance information of the video image data; and
a high resolution (HR) mode comprising obtaining photo image data having a higher resolution than the video image data to capture an image and obtaining second vision information having a higher resolution than the first vision information based on luminance information of the photo image data.
